# EUROPEAN PATENT APPLICATION

(11) **EP 2 818 671 A1**
(43) Date of publication of application: **31.12.2014**
(21) Application number: 13752122.5
(22) Date of filing: 01.02.2013
(51) Int. Cl.: F02C 7/27, F01D 19/00, F01D 21/00, F01D 25/34

(54) **GAS TURBINE STARTING/STOPPING DEVICE**

(30) Priority: 21.02.2012 JP 2012035498
(71) Applicant: Mitsubishi Heavy Industries, Ltd., Tokyo 108-8215 (JP)
(72) Inventor: ASANO Shin, Tokyo 108-8215 (JP); HIROKAWA Kazuharu, Tokyo 108-8215 (JP); TAKAOKA Yoshimasa, Tokyo 108-8215 (JP)
(74) Representative: Henkel, Breuer & Partner
(86) International application number: PCT/JP2013/052345
(87) International publication number: WO 2013/125329

(57) **Abstract**

This starting/stopping device (1) is equipped with: a transmission rotation shall (4) which rotates integrally with a gas turbine (2); a hydraulic pump (10) for contiguously generating a prescribed oil pressure; a high-pressure oil reservoir (5) into which the oil pressure generated by the hydraulic pump is introduced; a low-pressure oil reservoir (6) into which the toil pressure generated by the hydraulic pump is introduced, and which is set to a lower pressure than the high-pressure oil reservoir; a hydraulic motor (20) which uses the oil pressure to rotate the transmission rotation shaft; an oil-pressure switching valve (9) for introducing, into the hydraulic motor, the oil pressure from either the high-pressure oil reservoir or the low-pressure oil reservoir; and a rotation controller for controlling the hydraulic motor on the basis of the rotational frequency of the gas turbine.

## Description

### Technical Field

The present invention relates to a gas turbine start/stop apparatus. Priority is claimed on Japanese Patent Application No. 2012-035498 filed February 21, 2012, the content of which is incorporated by reference herein.

### Background Art

As a related art, an apparatus which adopts a hydraulic pump or a hydraulic motor as gas turbine start/stop means is disclosed in Patent Document 1, for example.

In a configuration disclosed in Patent Document 1, a reversible hydraulic pump is disposed in a turbine shaft. In the configuration, if the rotation speed is equal to or less than a rated rotation speed when starting or stopping the gas turbine, the reversible hydraulic pump functions as a hydraulic motor, whereby being used as a rotation starting motor of the gas turbine. Also, in Patent Document 1, if the rotation speed is equal to or more than the rated rotation speed when starting or stopping the gas turbine, the reversible hydraulic pump functions as a hydraulic pump, whereby being used as a circulating pump for a lubricating oil.

As the gas turbine start/stop apparatus described in Patent Document 1, an apparatus which adopts an SSS (Synchro Self Shifting) clutch to switch between a starting motor system and a turning motor system has been known.

The turning motor system is a power system which is engaged with a main machinery system configured of a generator and the gas turbine via the SSS clutch performing the connection or disconnection between the turbine shaft and a power extraction shaft when starting or stopping the gas turbine, and transmits a power from the turning motor system to the main machinery system so as to maintain the turning rotation speed of the main machinery system. Meanwhile, the starting motor system is a rotation starting motor system which imparts a rotative power to the main machinery system in a turning rotation state until the main machinery system reaches a high-speed rotating range (2400 rpm (60 Hz), for example) where the main machinery system self-sustainably performs a rated rotation.

In the start/stop apparatus described above, when the gas turbine is started, the rotation speed of the main machinery system is accelerated to the turning rotation speed by connecting the turning motor system thereto, and then the turning rotation speed of the main machinery system is increased by driving the starting motor system. Subsequently, if the rotation speed of the main machinery system becomes higher than that of the turning motor system, the SSS clutch is disengaged, whereby only the starting motor system drives the main machinery system. Then, the starting motor system drives the main machinery system to reach a predetermined rotation speed where the main machinery system rotates self-sustainably. Next, if the self-sustained operation thereof is confirmed, the starting motor system is stopped, and the gas turbine thereby starts a rated operation.

On the other hand, when the gas turbine is stopped, since the operation of the main machinery system is stopped by driving the turning motor system, the starting motor system is disengaged. Thereby, the rotation speed of the main machinery system is decelerated. Also, since the rotation speed of the main machinery system becomes lower than that of the turning motor system, the SSS clutch is engaged. Therefore, the turning motor system is engaged with the main machinery system, whereby the turning rotation speed thereof is maintained.

### Prior Art Document

### Patent Document

[Patent Document 1] Japanese Unexamined Patent Application, First Publication No. S58-187529

### Summary of Invention

### Problem to be solved by the Invention

However, the gas turbine start/stop apparatus in the related art has a problem as follows.

At the time of stopping the operation of the main machinery system, since, when the turning motor system is engaged with the main machinery system by the SSS clutch, the gear of the SSS clutch is damaged by impact. Thereby, there is a problem in that the smooth connection or disconnection operation of the clutch is hindered and the operation of the gas turbine becomes unstable.

In addition, since the SSS clutch is provided in the turning motor system, the turning motor system is disconnected when the gas turbine performs an output operation. However, the starting motor system remains in a connected state after a main shaft system self-sustainably performs the rated operation. Subsequently, there is a problem in that the frictional resistance load of, for example, a bearing included in a rotation part of the starting motor system causes the power generation efficiency to be deteriorated. Therefore, there is room for improvement.

Furthermore, in the start/stop apparatus disclosed in Patent Document 1, the mechanical clutch remains in the engagement part between the load of the main machinery system and the hydraulic motor. Therefore, there is a problem similar to that of the start/stop apparatus adopting the SSS clutch described above.

An object of the present invention is to provide a gas turbine start/stop apparatus capable of suppressing the impact when a turning motor system, which is configured of a pressure generator and a rotative force generator and is used for starting or stopping a gas turbine (main machinery system), is engaged with the main machinery system, and capable of stabilizing the operation of the gas turbine.

In addition, another object of the present invention is to provide a gas turbine start/stop apparatus capable of improving the power generation efficiency.

### Means for solving the problem

According to a first aspect of the present invention, there is provided a gas turbine start/stop apparatus including: a transfer rotation shaft which rotates with a gas turbine; a pressure generator which continuously generates a predetermined oil pressure; a high-pressure oil accumulation portion that is introduced the oil pressure which generated by the pressure generator; a low-pressure oil accumulation portion that is introduced the oil pressure which generated by the pressure generator, and the pressure thereof is set to be lower than that of the high-pressure oil accumulation portion; a first valve portion which introduces the oil pressure generated in the pressure generator into either the high-pressure oil accumulation portion or the low-pressure oil accumulation portion; a rotative force generator which rotates the transfer rotation shaft using the oil pressure; a second valve portion which introduces either oil pressure of the high-pressure oil accumulation portion or the low-pressure oil accumulation portion into the rotative force generator; and a rotation controller which controls the rotative force generator based on the rotation speed of the gas turbine.

According to the first aspect of the present invention described above, when the gas turbine is started, the high-pressure oil, which is a part of the oil pressure generated in the pressure generator and is introduced into the high-pressure oil accumulation portion, is introduced into the rotative force generator by switching the second valve portion. Thereby, it is possible to generate a rotative force of the transfer rotation shaft. Subsequently, the rotative force generated in the rotative force generator is input to the gas turbine provided in the transfer rotation shaft integrally, whereby it is possible to start the gas turbine. In addition, when the gas turbine self-sustainably performs a rated operation, the second valve portion is switched such that the rotative force generator communicates with the low-pressure oil accumulation portion instead of the high-pressure oil accumulation portion, whereby the low-pressure oil is introduced into the rotative force generator. Therefore, the rotative force generator is in a low pressure state, whereby the generation of the rotative force to drive the transfer rotation shaft is stopped. At this time, since the rotative force generator is not in a high pressure state, the rotative force generator is in a state of being disconnected from the gas turbine.

On the other hand, when the gas turbine is stopped, the second valve portion is switched such that the rotative force generator communicates with the high-pressure oil accumulation portion, whereby the high-pressure oil is introduced into the rotative force generator. Therefore, the rotative force generator is in a high pressure state, whereby the rotative force is generated in the rotative force generator. In other words, since the rotative force generator and the gas turbine are connected to each other via the transfer rotation shaft, the generation of the pressure by the pressure generator is stopped. As a result, it is possible to stop the operation of the gas turbine.

As described above, since the second valve portion switches the oil pressure to be introduced into the rotative force generator between the high pressure and the low pressure, it is possible for a turning motor system configured of the pressure generator and the rotative force generator to be connected to or disconnected from a main machinery system having the gas turbine. Therefore, without using an SSS clutch in the related art, it is possible to suppress the impact due to the mechanical engagement.

Furthermore, since the rotation controller is provided, it is possible to, during the stop operation of the gas turbine, switch the second valve portion or to regulate the oil pressure (flow rate) to be introduced into the rotative force generator from the high-pressure oil accumulation portion. Thereby, it is possible to regulate the rotation speed of the transfer rotation shaft. Therefore, it is possible to more reliably suppress the impact due to the mechanical engagement described above.

In addition, when the gas turbine performs the rated operation, since the turning motor system, namely the pressure generator and the rotative force generator can be disconnected from the main machinery system such as the gas turbine and a generator, it is possible to reduce the load on the rotation shaft of the gas turbine. Thereby, it is possible to improve the power generation efficiency of the main machinery system.

Furthermore, since the rotative force generator using oil pressure, such as a hydraulic motor, can function as a starting motor to accelerate the gas turbine to a rated rotation speed after the turning operation at the time of starting the gas turbine, it is possible to stop the generation of the rotative force by switching the second valve portion such that the rotative force generator is in a low pressure state. Therefore, the starting motor in the related art becomes unnecessary, whereby it is possible to disconnect the starting motor, which has not been possible in the related art. Thereby, it is possible to further improve the power generation efficiency.

In the gas turbine start/stop apparatus according to a second aspect of the present invention, the pressure generator is provided with an oil pressure accumulator to which the oil pressure to be generated by the pressure generator is introduced, and further wherein a rotative force acting on the transfer rotation shaft after stopping a required operation of the gas turbine is input to the pressure generator and thereby the oil pressure is generated in the pressure generator, and the oil pressure in the pressure generator is introduced to the pressure accumulator.

In this case, it is possible to accumulate the high-pressure oil, which is generated by inputting the rotative force, namely power of a load system at the time of stopping the gas turbine, to the pressure generator, in the oil pressure accumulator. Therefore, it is possible to use the accumulated oil pressure as auxiliary power at the time of starting the gas turbine by introducing it in the high-pressure oil accumulation portion. Therefore, it is possible to reduce the required power to start the pressure generator at the time of starting the gas turbine, and it is thereby possible to improve the starting efficiency.

In the gas turbine start/stop apparatus according to a third aspect of the present invention, a pressure controller which controls the pressure generator based on torque of the transfer rotation shaft.

In this case, in the stop operation of the gas turbine, the pressure controller controls the pressure generator based on the detected torque of the transfer rotation shaft, whereby it is possible to regulate the torque of the transfer rotation shaft. Therefore, it is possible to more reliably suppress the impact due to the mechanical engagement described above.

In the gas turbine start/stop apparatus according to a fourth aspect of the present invention, the rotative force generator is connected to the gas turbine via a speed reducer and a clutch provided in the transfer rotation shaft.

According to the fourth aspect described above, it is possible to improve the stability of the rotation by providing the speed reducer and the clutch in the transfer rotation shaft, whereby the affordable range of the rotation speed or the torque with respect to the pressure generator and the rotative force generator can be widened. Thereby, it is possible to support the engagement operation between the turning motor system and the load of the main machinery system. Especially, by providing the speed reducer, it is possible to suppress the pulsatory motion due to the oil pressure generation in the pressure generator.

In the gas turbine start/stop apparatus according to a fifth aspect of the present invention, the pressure generator includes: a rotor in a gear shape which is rotated by a starting motor and includes a gear tooth portion having convex and concave shapes smoothly formed in an outer periphery portion thereof at a predetermined pitch; and a plurality of oil pressure generation cylinders provided in the outer periphery portion of the rotor, in each of which a first telescopic shaft performs a piston movement by being in contact with a convex portion of the rotor in a rotating state. Also, the high-pressure oil of the plurality of oil pressure generation cylinders may be introduced into the high-pressure oil accumulation portion and the low-pressure oil thereof may be introduced into the low-pressure oil accumulation portion.

According to the aspect described above, since each of the first telescopic shafts of the plurality of oil pressure generation cylinders performs a piston movement due to the rotation of the rotor, all of the high-pressure oils of the plurality of oil pressure generation cylinders are introduced into the high-pressure oil accumulation portion. Therefore, the high-pressure oil is almost continuously supplied to the high-pressure oil accumulation portion, whereby, it is possible to maintain the high pressure state.

Furthermore, since it is possible to individually control the plurality of oil pressure generation cylinders by the first valve portion, the fine control can be realized. Thereby, it is possible to more stably perform the start/stop operation of the gas turbine.

Moreover, there is an advantage in that, even if one of the oil pressure generation cylinders fails, the other cylinders can back it up.

In the gas turbine start/stop apparatus according to a sixth aspect of the present invention, the rotative force generator includes: a plurality of rotating bodies having the same rotation center axis; an eccentric rotation body which connects the rotating bodies to each other and is provided eccentrically with respect to the rotation center axis; and the plurality of rotative force generation cylinders disposed outside a trajectory of the eccentric rotation body rotating around the rotation center axis. Also, each of the plurality of rotative force generation cylinders comprises a second telescopic shaft that extends outward due to the oil pressure of the pressure generator, so that the second telescopic shaft is rotated so as to trace the trajectory thereof.

According to the sixth aspect described above, since it is possible to individually control the plurality of rotative force generation cylinders, the fine control can be realized with respect to the rotation speed of the rotation body. Thereby, it is possible to more stably perform the start/stop operation of the gas turbine.

Moreover, there is an advantage in that, even if one of the rotative force generation cylinders fails, the other cylinders can back it up.

### Effect of the Invention

In the gas turbine start/stop apparatus according to the aspects of the present invention, by regulating oil pressure using a second valve portion, it is possible for a turning motor system, which is configured of a pressure generator and a rotative force generator and is used for starting or stopping a gas turbine (main machinery system), to be connected to or disconnected from the main machinery system. Therefore, it is possible to suppress the impact at the time of engaging the turning motor system with the main machinery system, whereby it is possible to stabilize the operation of the gas turbine.

In addition, in the gas turbine start/stop apparatus according to the aspects of the present invention, when the gas turbine performs a rated operation, it is possible to stop the generation of the rotative force in the rotative force generator. Therefore, the starting motor in the related art which is unable to be disconnected from the main machinery system becomes unnecessary, whereby it is possible to disconnect the rotative force generator from the main machinery system. As a result, it is possible to improve the power generation efficiency.

### Brief Description of the Drawings

FIG. 1 is a block view showing the whole configuration of a start/stop apparatus according to an embodiment of the present invention.
FIG. 2 is a schematic view showing the configuration of a turning motor system shown in FIG. 1.
FIG. 3 is a side view of a hydraulic motor.
FIG. 4 is a block view which shows the whole configuration of a start/stop apparatus according to another embodiment and corresponds to FIG. 1.

### Description of the Embodiments

Hereinafter, a gas turbine start/stop apparatus according to an embodiment of the present invention will be described referring to the drawings. The embodiment shows an aspect of the present invention. However, the present invention is not limited thereto and the embodiment can be arbitrarily changed unless departing from the scope of the technical idea of the present invention.

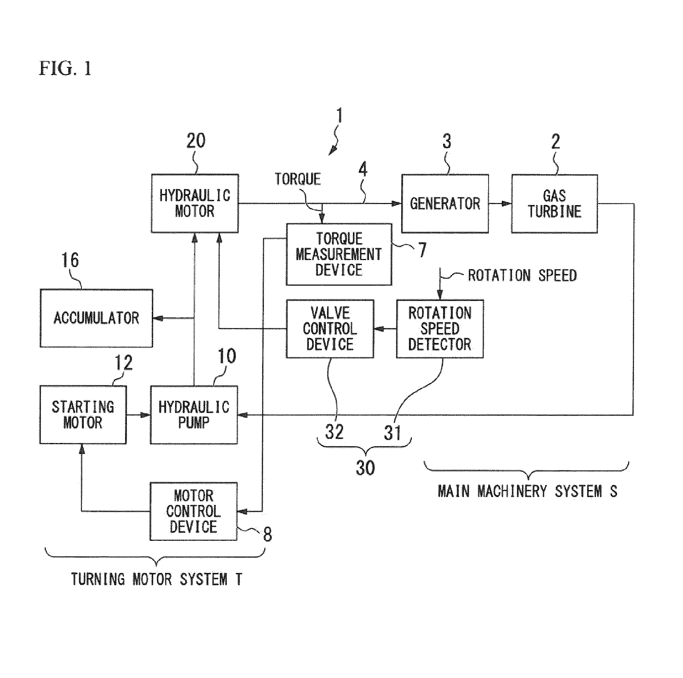

As shown in FIG. 1, a gas turbine 2 which a gas turbine start/stop apparatus (hereinafter, referred to as "start/stop apparatus 1") of the embodiment is applied includes a turbine main body, a combustor, a compressor, an exhaust gas duct and the like. A rotation shaft of the compressor is engaged with a rotation shaft (gas turbine rotation shaft) of a gas turbine main body. The compressor compresses the supplied outside air (air) by rotating with the gas turbine main body. The combustor generates a combustion gas to rotate the gas turbine main body by burning a fuel gas with the compressed air supplied from the compressor, and supplies the combustion gas to the gas turbine main body. The combustion gas after passing through the gas turbine main body is exhausted via the exhaust gas duct provided in a rear portion (downstream side) of the gas turbine main body. The exhausted combustion gas is released into the atmosphere after the heat thereof is recovered by an exhaust heat recovery boiler, for example.

A generator 3 to increase the speed of the gas turbine main body before igniting the fuel gas is provided in the gas turbine 2. The generator 3 functions as a motor, thereby rotationally driving the gas turbine 2 (gas turbine main body).

In addition, the start/stop apparatus 1 of a turning motor system T which starts or stops the gas turbine 2 by being engaged with a turbine rotation shaft is provided in the gas turbine 2. Furthermore, the DDT system (Digital Displacement Transmission), which is a hydraulic power transmission system manufactured by Artemis Intelligent Power, Ltd., can be adopted as the start/stop apparatus 1 of the embodiment.

The start/stop apparatus 1 is schematically constituted by including a transfer rotation shaft 4 integrally rotating with the gas turbine 2, a hydraulic pump 10 (pressure generator) continuously generating a predetermined oil pressure, a high-pressure oil accumulation portion 5 in which the oil pressure generated in the hydraulic pump 10 is introduced, a low-pressure oil accumulation portion 6 of which the pressure is set to be lower than that of the high-pressure oil accumulation portion 5 by introducing the oil pressure generated in the hydraulic pump 10 therein, a hydraulic motor 20 (rotative force generator) to rotate the rotation shaft 4 using the oil pressure generated in the hydraulic pump 10, and a rotation controller 30 to control the hydraulic motor 20 based on the rotation speed of the gas turbine 2.

In the following description, the gas turbine 2 and the generator 3 are referred to as a main machinery system S, and the hydraulic pump 10 and the hydraulic motor 20 are referred to as a turning motor system T (described above).

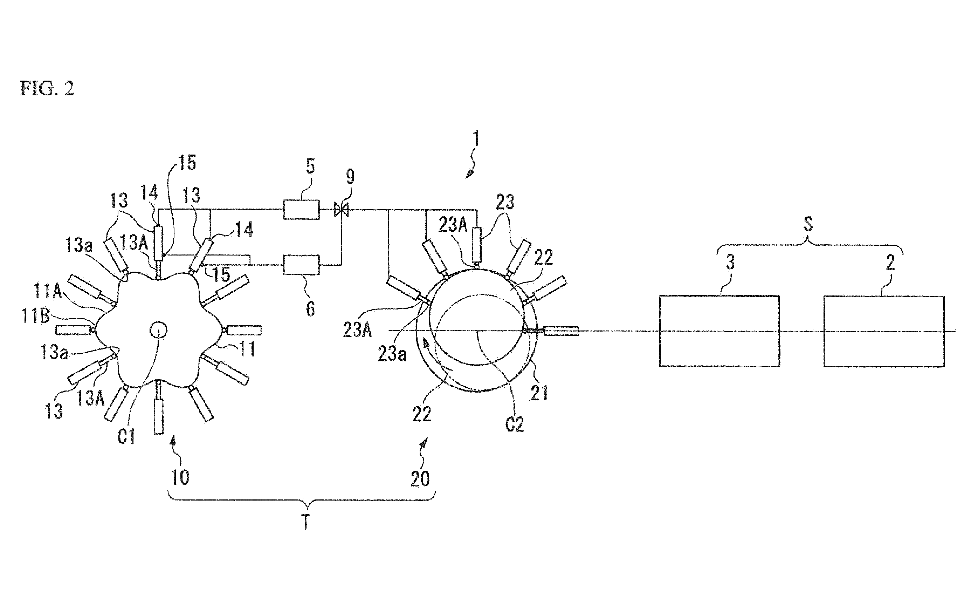

As shown in FIG. 2, the hydraulic pump 10 includes a rotary gear 11 (rotor) in a gear shape which is rotated by a starting motor 12 and includes a gear tooth portion (concave portions 11 A and convex portions 11B) having convex and concave shapes smoothly formed in an outer periphery portion thereof at a predetermined pitch, and a plurality of first hydraulic cylinders 13 (oil pressure generation cylinders) which are provided in the outer periphery portion of the rotary gear 11 and each first telescopic shafts 13A thereof performs a piston movement by being in contact with the convex portions 11B of the rotary gear 11 in a rotating state. The hydraulic pump 10 is configured such that the high-pressure oil of the first hydraulic cylinders 13 is introduced into the high-pressure oil accumulation portion 5, and the low-pressure oil is introduced into the low-pressure oil accumulation portion 6.

In this case, a motor control device 8 which controls the motor rotation speed based on a torque measurement device 7 measuring the torque of the hydraulic motor 20 is provided in the starting motor 12, as shown in FIG. 1.

The motor control device 8 measures the torque of a rotation shaft system and, based on the measuring results, controls the pressure of the hydraulic pump 10 which determines the pressure to be supplied to the hydraulic motor 20. Also, when the gas turbine 2 is started or stopped, the motor control device 8 performes control to optimize the power of the starting motor 12 to drive the hydraulic pump 10.

In the rotary gear 11, the concave portions 11A and the convex portions 11B are alternately formed at a predetermined pitch along the outer circumferential surface thereof, and the concave portions 11A and the convex portions 11B continue in a smooth curve shape. The rotary gear 11 rotates around a gear axis C1 by being driven by the starting motor 12. The height of the convex portion 11B (height difference between a bottom of the concave portion 11A and an apex of the convex portion 11B) corresponds to protruding amounts of the first telescopic shaft 13A of the first hydraulic cylinder 13 (described below in detail).

The plurality of first hydraulic cylinders 13 are radially disposed in a state where the extending/retracting direction of the first telescopic shafts 13A is toward the radial direction of the rotary gear 11 such that tip ends of the telescopic shafts 13a contact with the concave portions 11A and the convex portions 11 B of the rotary gear 11. The first hydraulic cylinders 13 are provided so as to perform a piston movement in a state where only the tip ends of the telescopic shafts 13a thereof are in contact with the concave portion s 11A or the convex portions 11B of the rotary gear 11. Also the first hydraulic cylinders 13 are configured such that all of the first telescopic shafts 13A disposed in the circumferential direction of the gear axis C1 so as to continuously perform an extending/retracting movement corresponding to the rotation of the rotary gear 11.

In each of the first hydraulic cylinders 13, valves 14 and 15 (first valve portion) which selectively introduce the oil pressure generated in the hydraulic pump 10 into either the high-pressure oil accumulation portion 5 or the low-pressure oil accumulation portion 6 are provided. In this case, the valve on a high pressure side is designated as the high pressure valve 14, and the valve on a low pressure side is designated as the low pressure valve 15.

The hydraulic pump 10 is connected to the high-pressure oil accumulation portion 5, in which each of the high-pressure oil in the first hydraulic cylinders 13 is accumulated and introduced, and the low-pressure oil accumulation portion 6, in which each of the low-pressure oil in the first hydraulic cylinders 13 is accumulated and introduced.

In this case, the high pressure is defined as a pressure which enables eccentric rotation bodies 22 to rotate around a motor rotation axis C2 by an extending force (pushing force) of second hydraulic cylinders 23 of the hydraulic motor 20 described below, and the low pressure is defined as a pressure which is unable to rotate eccentric rotation bodies 22 around the motor rotation axis C2 by the extending force (pushing force) of the second hydraulic cylinders 23 of the hydraulic motor 20 described below.

The start/stop apparatus 1 includes a hydraulic switch valve 9 (second valve portion) which selectively introduces either oil pressure of the high-pressure oil accumulation portion 5 or the low-pressure oil accumulation portion 6 in the hydraulic motor 20.

As shown in FIG. 1, an accumulator 16 (oil pressure accumulator) capable of introducing the generated oil pressure therein is provided in the hydraulic pump 10. The oil pressure which is generated by inputting the rotative force at the time of stopping the gas turbine 2 in the hydraulic pump 10 is introduced into the accumulator 16.

In the hydraulic pump 10 configured as above, when the rotation speed of the rotary gear 11 is increased, the speed of the piston movement of the first hydraulic cylinder 13, which moves extendingly or retractingly, is increased. In other words, the flow rate of the high-pressure oil is increased, whereby the oil pressure of the high-pressure oil accumulation portion 5 is increased. Also, it is easy to maintain the high pressure state thereof.

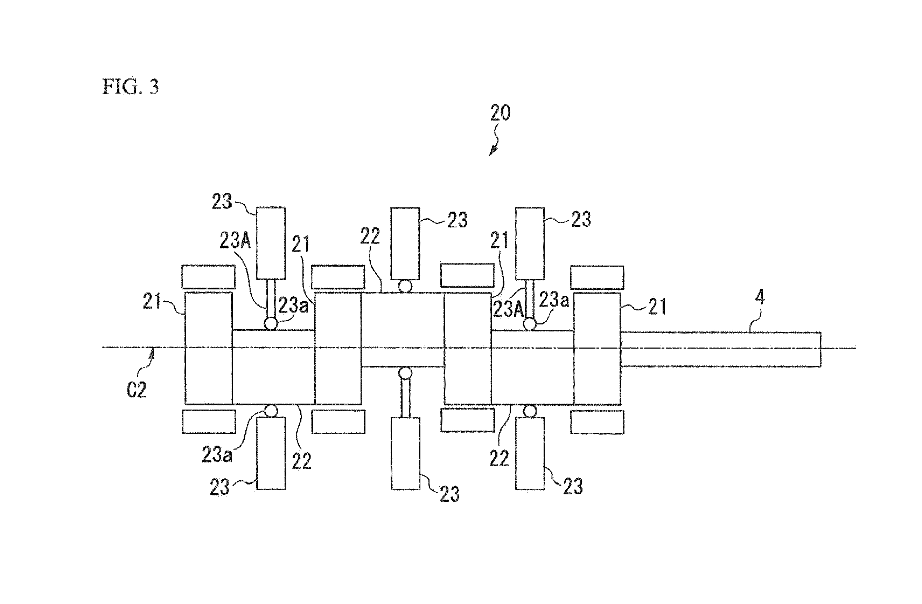

As shown in FIGS. 2 and 3, the hydraulic motor 20 is schematically configured to include a plurality (four, in the embodiment) of rotating bodies 21 which are rotatably supported by a bearing and have the rotation center in the motor rotation axis C2 (rotation center axis), the eccentric rotation bodies 22 which connect the rotating bodies 21 to each other and is provided eccentrically with respect to the motor rotation axis C2, and a plurality of second hydraulic cylinders 23 (rotative force generation cylinders) which are provided in the outer periphery portion of a trajectory of the eccentric rotation bodies 22 rotating around the motor rotation axis C2 and are spaced apart from each other in the circumferential direction of the motor rotation axis C2.

The rotation body 21 is integrally and coaxially connected to the transfer rotation shaft 4 engaged with the gas turbine 2. The eccentric rotation bodies 22 rotate around the motor rotation axis C2.

The oil pressure generated in the hydraulic pump 10 is supplied to the second hydraulic cylinders 23. Therefore, the extending/retracting direction of second telescopic shafts 23A is toward the motor rotation axis C2 side such that tip ends of the telescopic shafts 23a can contact with the eccentric rotation bodies 22. Also, the second hydraulic cylinders 23 are configured to push the eccentric rotation bodies 22 so as to rotate the eccentric rotation bodies 22 along the trajectory by extending the second telescopic shafts 23A thereof using the oil pressure of the hydraulic pump 10.

Furthermore, a plurality of second hydraulic cylinders 23 are disposed such that all of the tip ends of the telescopic shafts 23a are in contact with the eccentric rotation bodies 22, and the second telescopic shafts 23A thereof are in a state of being extended or retracted.

In the case of being connected to the high-pressure oil accumulation portion 5, the second hydraulic cylinders 23 are configured such that, when the tip ends of the telescopic shafts 23a is retracted, by contacting with the eccentric rotation bodies 22, the second telescopic shafts 23A are extended by the high-pressure oil supplied from the hydraulic pump 10, whereby pushing the eccentric rotation body 22s in a direction where the eccentric rotation bodies 22 rotate around the motor rotation axis C2. Furthermore, since the plurality of the second hydraulic cylinders 23 are provided in the trajectory area of the eccentric rotation bodies 22, it is possible to continuously rotate the eccentric rotation bodies 22 around the motor rotation axis C2, whereby it is possible to impart a rotative force to the rotation bodies 21 via the eccentric rotation bodies 22.

On the other hand, in the case of being connected to the low-pressure oil accumulation portion 6, since the oil pressure is not supplied to the second hydraulic cylinders 23, when the tip ends of the telescopic shafts 23a contact with the eccentric rotation bodies 22 and are retracted, the second hydraulic cylinders 23 become a low pressure state by communicating with the low-pressure oil accumulation portion 6. In other words, since the extending force (pushing force) which pushes the eccentric rotation bodies 22 where the eccentric rotation bodies 22 rotate around the motor rotation axis C2 is not obtained, it is difficult to continuously rotate the eccentric rotation bodies 22 around the motor rotation axis C2. Therefore, the hydraulic motor 20 is in a state (hereinafter, referred to as "idle state") where the rotative force is not transmitted to the rotation bodies 21 via the eccentric rotation bodies 22.

As shown in FIG. 1, the rotation controller 30 is formed of a rotation speed detector 31 to detect the rotation speed of the rotation shaft 4, and a valve control device 32 to control the hydraulic switch valve 9 based on the rotation speed detected by the rotation speed detector 31.

In the valve control device 32, it is possible to variably control the flow rate of the second hydraulic cylinders 23 of the hydraulic motor 20.

Next, the operation at the time of starting or stopping the gas turbine 2 will be described with reference to the start/stop apparatus 1 according to the embodiment.

### (At the time of starting gas turbine)

As shown in FIGS. 1 and 2, when the gas turbine 2 is started, first, the hydraulic pump 10 is started by the starting motor 12, and the rotation speed of the hydraulic pump 10 is increased by increasing the rotation speed of the hydraulic motor 20. Specifically, when the rotary gear 11 is rotated by driving the starting motor 12, the plurality of the first hydraulic cylinders 13 disposed on the outer circumferential side of the rotary gear 11 perform a piston movement along the unevenness on the concave portions 11A and the convex portions 11B formed on the rotary gear 11. Also, the high-pressure oil at the time of the retraction of the first hydraulic cylinders 13 are introduced into the high-pressure oil accumulation portion 5 via the high pressure valve 14. That is, the high-pressure oil accumulation portion 5 is in a high-pressure state that is maintained by introducing the oil pressure generated in the plurality of the first hydraulic cylinders 13 therein. At this time, the oil pressure in the low-pressure oil accumulation portion 6 which is connected to the first hydraulic cylinder 13 on the low pressure side (first hydraulic cylinder 13 on the extending side) so as to introduce the low-pressure oil therein is lower than that of the high-pressure oil. Furthermore, the oil pressure of the low-pressure oil accumulation portion 6 is at least lower than that of the second hydraulic cylinders 23.

In this case, when the flow rate supplied from the plurality of the first hydraulic cylinders 13 is increased, the oil pressure of the high-pressure oil in the high-pressure oil accumulation portion 5 is increased, whereby the rotation speed of the hydraulic pump 10 (rotary gear 11) is increased. As a result, it is possible to increase the oil pressure thereof.

In addition, since the high-pressure oil accumulation portion 5 maintains a high pressure state corresponding to the rotation speed of the rotary gear 11, the plurality of the second hydraulic cylinders 23 of the hydraulic motor 20 are in a high pressure state by switching the hydraulic switch valve 9 such that the high-pressure oil accumulation portion 5 communicates with the hydraulic motor 20. Therefore, the second telescopic shafts 23A thereof are extended. Thereby, all of the plurality of the second hydraulic cylinders 23 are in contact with the eccentric rotation bodies 22, as described above, and the tip ends of the telescopic shafts 23a of the second hydraulic cylinders 23 push the eccentric rotation bodies 22 in a direction where the eccentric rotation bodies 22 rotate around the motor rotation axis C2. Thereby, the rotation bodies 21 rotate around the motor rotation axis C2 via the eccentric rotation bodies 22, whereby a rotative force is applied to the hydraulic motor 20.

In addition, since the hydraulic motor 20 is engaged with the main machinery system S (gas turbine 2 and generator 3) by the rotation shaft 4, the gas turbine 2 is started by the rotative force of the hydraulic motor 20, whereby the operation of the main machinery system S starts.

Next, when the main machinery system S self-sustainably performs the rated operation, the hydraulic switch valve 9 of the hydraulic motor 20 is switched so as to be in the idle state, namely switching the hydraulic switch valve 9 to the low pressure side. Thereby, the main machinery system S (gas turbine 2) which is the load of the hydraulic motor 20 is disconnected from the start/stop apparatus 1.

Specifically, when the rotation speed of the transfer rotation shaft 4 is detected by the rotation speed detector 31 and the rotation speed thereof is arrived at a predetermined rotation speed (rated rotation speed), the valve control device 32 switches the hydraulic switch valve 9 to the idle state. Thereby, the communication state between the second hydraulic cylinders 23 and the high-pressure oil accumulation portion 5 is cut off, and the second hydraulic cylinders 23 communicate with the low-pressure oil accumulation portion 6. As a result, the low-pressure oil is introduced into the second hydraulic cylinders 23.

Therefore, since the extending force (pushing force) of the second telescopic shafts 23A of the second hydraulic cylinders 23 is decreased, it is unable to push the eccentric rotation bodies 22 in the rotation direction. Thereby, a driving force by the hydraulic pump 10 is not transmitted to the hydraulic motor 20. At this time, the second hydraulic cylinders 23 and the rotation bodies 21 (eccentric rotation bodies 22) are in a state of being disconnected from each other.

### (At the time of stopping gas turbine)

Next, the operation of the start/stop apparatus 1 at the time of stopping the gas turbine 2 will be described. The operation at the time of stopping the gas turbine 2 basically follows the procedure reverse to the procedure at the time of starting the gas turbine 2 described above.

First, the main machinery system S (gas turbine 2 and generator 3) is stopped, whereby the rotation speed of the main machinery system S is decreased. Thereby, the main machinery system S is decelerated. Specifically, when the rotation speed detector 31 detects the rotation speed of the main machinery system S, if the rotation speed thereof arrives at about the turning rotation speed (3 rpm), the valve control device 32 starts the valve control. Thereby, the operation of the hydraulic motor 20 is controlled. In other words, the rotation speed or the torque thereof is regulated by controlling the hydraulic switch valve 9 based on the detected rotation speed, whereby it is possible to suppress the impact at the time of engaging the second hydraulic cylinders 23 with the eccentric rotation bodies 22. Subsequently, the turning rotation speed thereof is maintained by the hydraulic motor 20 after the engaging process therebetween, and then the starting motor 12 and the hydraulic pump 10 are stopped. Thereby, the operation of the hydraulic motor 20 is stopped and the gas turbine 2 is completely stopped.

Next, the operation of the start/stop apparatus 1 configured as above will be described in detail with reference to the drawings.

As shown in FIG 1, in the start/stop apparatus 1 according to the embodiment, when the gas turbine 2 is started, the high-pressure oil which is a part of the oil pressure generated in the hydraulic pump 10 and introduced into the high-pressure oil accumulation portion 5 is introduced into the hydraulic motor 20 by switching the hydraulic switch valve 9. Thereby, it is possible to generate the rotative force of the transfer rotation shaft 4. Subsequently, the rotative force generated in the hydraulic motor 20 is input to the gas turbine 2 provided in the transfer rotation shaft 4 integrally, and it is thereby possible to start the gas turbine 2.

In addition, when the gas turbine 2 self-sustainably performs the rated operation, the hydraulic switch valve 9 is switched such that the hydraulic motor 20 communicates with the low-pressure oil accumulation portion 6 instead of the high-pressure oil accumulation portion 5, and the low-pressure oil is thereby introduced into the hydraulic motor 20. Therefore, the hydraulic motor 20 is in a low pressure state, and the generation of the rotative force to drive the transfer rotation shaft 4 is thereby stopped. At this time, since the hydraulic motor 20 is not in a high pressure state, the hydraulic motor 20 is in a state disconnected from the gas turbine 2.

Furthermore, when the gas turbine 2 is stopped, the hydraulic switch valve 9 is switched such that the high-pressure oil accumulation portion 5 communicates with the hydraulic motor 20, and the high-pressure oil is thereby introduced into the hydraulic motor 20. Therefore, the hydraulic motor 20 is in a high pressure state, and the rotative force is thereby generated in the hydraulic motor 20. In other words, since the hydraulic motor 20 and the gas turbine 2 are connected to each other via the transfer rotation shaft 4, the generation of the pressure by the hydraulic pump 10 is stopped. As a result, it is possible to stop the operation of the gas turbine 2.

As described above, since the oil pressure to be introduced into the hydraulic motor 20 is switched between the high pressure and the low pressure by the hydraulic switch valve 9, it is possible for the turning motor system T configured of the hydraulic pump 10 and the hydraulic motor 20 to be connected to or disconnected from the main machinery system S having the gas turbine 2. Therefore, without using the SSS clutch of the related art, it is possible to suppress the impact due to the mechanical engagement.

In addition, since the rotation controller 30 is provided, it is possible to, during the stop operation of the gas turbine 2, switch the hydraulic switch valve 9 or to regulate the oil pressure (flow rate) to be introduced into the hydraulic motor 20 from the high-pressure oil accumulation portion 5. Thereby, it is possible to regulate the rotation speed of the transfer rotation shaft 4. Therefore, it is possible to more reliably suppress the impact due to the mechanical engagement described above.

Furthermore, when the gas turbine 2 performs the rated operation, since the turning motor system T can be disconnected from the main machinery system S, it is possible to reduce the load on the rotation shaft of the gas turbine 2. Thereby, it is possible to improve the power generation efficiency of the main machinery system S.

In addition, since the hydraulic motor 20 can function as the starting motor to accelerate the gas turbine 2 to the rated rotation speed after the turning operation at the time of starting the gas turbine 2, it is possible to stop the generation of the rotative force by switching the hydraulic switch valve 9 such that the hydraulic motor 20 is in a low pressure state. Therefore, the starting motor in the related art becomes unnecessary, whereby it is possible to disconnect the starting motor, which has not been possible in the related art. Thereby, it is possible to further improve the power generation efficiency.

Furthermore, the rotation controller 30 controls so as to, during the stop operation of the gas turbine 2, cause the hydraulic switch valve 9 to be switched or to regulate the oil pressure (flow rate) to be introduced into the hydraulic motor 20 from the high-pressure oil accumulation portion 5. Thereby, it is possible to regulate the rotation speed of the transfer rotation shaft 4. Therefore, it is possible to more reliably suppress the impact due to the mechanical engagement described above.

In addition, since the accumulator 16 capable of introducing the oil pressure generated in the hydraulic pump 10 therein is provided, it is possible to accumulate the high-pressure oil, which is generated by inputting the rotative force, namely power of a load system at the time of stopping the gas turbine 2, to the hydraulic pump 10, in the accumulator 16. Therefore, it is possible to use the accumulated oil pressure as auxiliary power at the time of starting the gas turbine 2 by introducing it in the high-pressure oil accumulation portion 5. Thereby, it is possible to reduce a required power to start the hydraulic pump 10 at the time of starting the gas turbine 2, whereby it is possible to improve the starting efficiency.

Furthermore, in the start/stop apparatus 1 according to the embodiment, when the gas turbine 2 performs the stop operation, the pressure controller (torque measurement device 7 and motor control device 8) controls the hydraulic pump 10 based on the detected torque of the transfer rotation shaft 4, and it is thereby possible to regulate the torque of the transfer rotation shaft 4. Therefore, it is possible to more reliably suppress the impact due to the mechanical engagement described above.

Furthermore, since each of the first telescopic shafts 13A of the plurality of the first hydraulic cylinders 13 performs a piston movement due to the rotation of the rotary gear 11, all of the high-pressure oil of the plurality of first hydraulic cylinders 13 are introduced into the high-pressure oil accumulation portion 5. Therefore, the high-pressure oil is almost continuously supplied to the high-pressure oil accumulation portion 5, and it is therefore possible to maintain the high pressure state.

In addition, since it is possible to individually control the plurality of first hydraulic cylinders 13 by the high pressure valve 14, the fine control can be realized. Thereby, it is possible to more stably perform the start/stop operation of the gas turbine 2.

Moreover, there is an advantage in that, even if one of the first hydraulic cylinders 13 fails, the other cylinders can back it up.

Furthermore, since it is possible to individually control the plurality of second hydraulic cylinders 23, the fine control can be realized with respect to the rotation speed of the rotation bodies 21. Thereby, it is possible to more stably perform the start/stop operation of the gas turbine 2.

Moreover, there is an advantage in that, even if one of the second hydraulic cylinders 23 fails, the other cylinders can back it up.

In the gas turbine start/stop apparatus according to the embodiment described above, by regulating the oil pressure using the hydraulic switch valve 9, it is possible for the turning motor system T, which is used for starting or stopping the gas turbine 2 (main machinery system S), to be connected to or disconnected from the main machinery system S. Therefore, it is possible to suppress the impact at the time of engaging or disengaging the turning motor system T with or from the main machinery system S, and it is possible to stabilize the operation of the gas turbine 2.

In addition, when the gas turbine 2 performs the rated operation, it is possible to stop the generation of the rotative force in the hydraulic motor 20. Therefore, the starting motor in the related art which is unable to be disconnected from the main machinery system S becomes unnecessary, whereby it is possible to disconnect the hydraulic motor 20 from the main machinery system S. As a result, it is possible to improve the power generation efficiency.

Hereinbefore, the embodiment of the gas turbine start/stop apparatus according to the aspect of the present invention is described. The invention is not limited to the embodiments described above, and can be modified in various ways without departing from the scope of the invention..

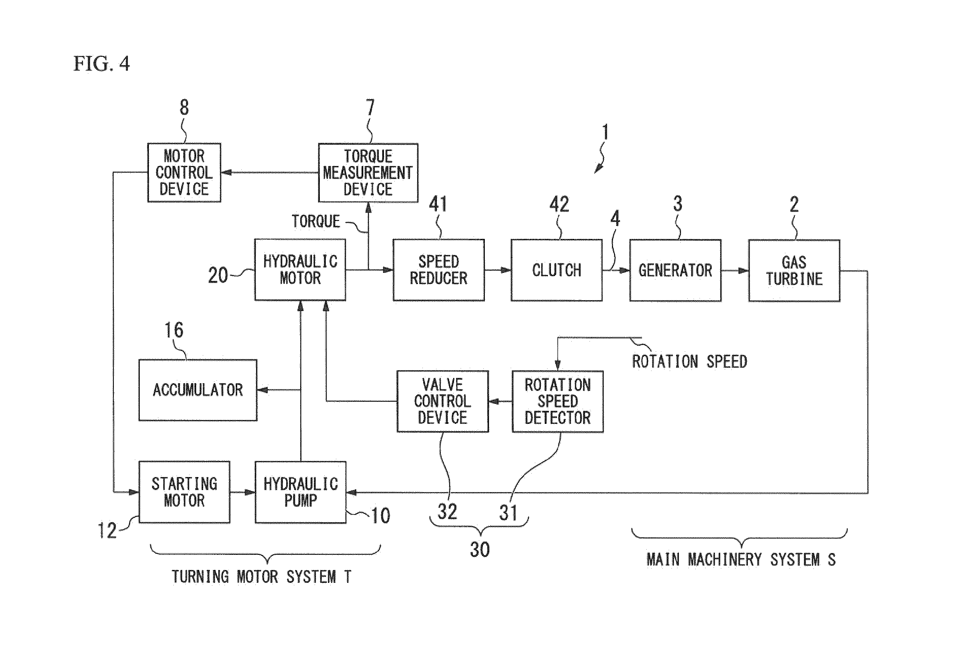

For example, as shown in FIG. 4, the start/stop apparatus 1 may have a configuration in which the hydraulic motor 20 is connected to the gas turbine 2 via a speed reducer 41 and a clutch 42 which are provided in the transfer rotation shaft 4.

In this case, it is possible to improve the stability of the rotation by providing the speed reducer 41 and the clutch 42 in the transfer rotation shaft 4, whereby the affordable range of the rotation speed or the torque with respect to the hydraulic pump 10 and the hydraulic motor 20 can be widened. Thereby, it is possible to support the engagement operation between the turning motor system T and the load of the main machinery system S. Especially, by providing the speed reducer 41, it is possible to suppress the pulsatory motion due to the oil pressure generation in the hydraulic pump 10.

Furthermore, the specific configuration of the hydraulic pump 10 or the hydraulic motor 20 is not limited to the embodiment, and the configuration can be appropriately changed. In other words, the configuration such as the shape or pitch of the concave portions 11A and the convex portions 11B of the rotary gear 11 or the number or position of the first hydraulic cylinders 13 can be changed in the hydraulic pump 10 according to the embodiment described above.

Moreover, the constituting component in the embodiments described above can be appropriately replaced by a known constituting component unless departing from the scope of the present invention. Also, the embodiments described above may be appropriately combined with each other.

### Industrial Applicability

According to the gas turbine start/stop apparatus, by regulating the oil pressure using the second valve portion, it is possible for the turning motor system, which is configured of the pressure generator and the rotative force generator and is used for starting or stopping the gas turbine (main machinery system), to be connected to or disconnected from the main machinery system. Therefore, it is possible to suppress the impact at the time of engaging the turning motor system with the main machinery system, and it is thereby possible to stabilize the operation of the gas turbine.

### Description of Reference Numerals and Signs

- 1:: start/stop apparatus (gas turbine start/stop apparatus)
- 2:: gas turbine
- 3:: generator
- 4:: rotation shaft
- 5:: high-pressure oil accumulation portion
- 6:: low-pressure oil accumulation portion
- 7:: torque measurement device
- 8:: motor control device
- 9:: hydraulic switch valve (second valve portion)
- 10:: hydraulic pump (pressure generator)
- 11:: rotary gear (rotor)
- 12:: starting motor
- 13:: first hydraulic cylinder (pressure generation cylinder)
- 13A:: first telescopic shaft
- 14:: high pressure valve (first valve portion)
- 15:: low pressure valve (first valve portion)
- 16:: accumulator (oil pressure accumulator)
- 20:: hydraulic motor (rotative force generator)
- 23:: second hydraulic cylinder (rotation shaft generation cylinder)
- 23A:: second telescopic shaft
- 30:: rotation controller
- 31:: rotation speed detector
- 32:: valve control device
- 41:: speed reducer
- 42:: clutch
- C1:: gear axis
- C2:: motor rotation axis (rotation center axis)
- S:: main machinery system
- T:: turning motor system

## Claims

1. A gas turbine start/stop apparatus comprising:
a transfer rotation shaft that rotates with a gas turbine;
a pressure generator that continuously generates a predetermined oil pressure;
a high-pressure oil accumulation portion that is introduced the oil pressure which generated by the pressure generator;
a low-pressure oil accumulation portion that is introduced the oil pressure which generated by the pressure generator, and the pressure of the low-pressure oil accumulation portion is set to be lower than that of the high-pressure oil accumulation portion;
a first valve portion that introduces the oil pressure generated in the pressure generator into either the high-pressure oil accumulation portion or the low-pressure oil accumulation portion;
a rotative force generator that rotates the transfer rotation shaft using the oil pressure;
a second valve portion that introduces either oil pressure of the high-pressure oil accumulation portion or the low-pressure oil accumulation portion into the rotative force generator; and
a rotation controller that controls the rotative force generator based on the rotation speed of the gas turbine.

2. The gas turbine start/stop apparatus according to Claim 1, wherein
the pressure generator is provided with an oil pressure accumulator to which the oil pressure to be generated by the pressure generator is introduced, and further wherein
a rotative force acting on the transfer rotation shaft after stopping a required operation of the gas turbine is input to the pressure generator and thereby the oil pressure is generated in the pressure generator, and
the oil pressure in the pressure generator is introduced to the pressure accumulator.

3. The gas turbine start/stop apparatus according to Claim 1 or 2, further comprising:
a pressure controller that controls the pressure generator based on torque of the transfer rotation shaft.

4. The gas turbine start/stop apparatus according to any one of Claims 1 to 3, wherein
the rotative force generator is connected to the gas turbine via a speed reducer and a clutch provided in the transfer rotation shaft.

5. The gas turbine start/stop apparatus according to any one of Claims 1 to 4, wherein
the pressure generator includes:
a rotor in a gear shape that is rotated by a starting motor and includes a gear tooth portion having convex and concave shapes smoothly formed in an outer periphery portion thereof at a predetermined pitch; and
a plurality of oil pressure generation cylinders provided in the outer periphery portion of the rotor, in each of which a first telescopic shaft performs a piston movement by being in contact with a convex portion of the rotor in a rotating state, and wherein
the high-pressure oil of the plurality of oil pressure generation cylinders is introduced into the high-pressure oil accumulation portion and the low-pressure oil thereof is introduced into the low-pressure oil accumulation portion.

6. The gas turbine start/stop apparatus according to any one of Claims 1 to 5, wherein
the rotative force generator includes:
a plurality of rotating bodies having the same rotation center axis;
an eccentric rotation body that connects the rotating bodies to each other and is provided eccentrically with respect to the rotation center axis; and
a plurality of rotative force generation cylinders disposed outside a trajectory of the eccentric rotation body rotating around the rotation center axis, and
each of the plurality of rotative force generation cylinders comprises a second telescopic shaft that extends outward due to the oil pressure of the pressure generator, so that the second telescopic shaft is rotated so as to trace the trajectory thereof.
